# EUROPÄISCHE PATENTSCHRIFT

(11) **EP 4 026 041 B1**
(45) Veröffentlichungstag und Bekanntmachung des Hinweises auf die Patenterteilung: **27.03.2024**
(21) Anmeldenummer: 20764988.0
(22) Anmeldetag: 01.09.2020
(51) Int. Cl.: G06K 7/08, G06F 3/046

(54) **VERFAHREN ZUM AUSLESEN VON INFORMATIONEN AUS EINEM EIN- ODER MEHRDIMENSIONALEN CODIERFELD**
METHOD FOR READING INFORMATION FROM A ONE- OR MULTIDIMENSIONAL CODING FIELD
PROCÉDÉ DE LECTURE D'INFORMATIONS À PARTIR D'UN CHAMP DE CODAGE UNIDIMENSIONNEL OU MULTIDIMENSIONNEL

(30) Priorität: 03.09.2019 DE 102019123583
(43) Veröffentlichungstag der Anmeldung: 13.07.2022
(73) Patentinhaber: Bogen Magnetics GmbH, 14163 Berlin (DE)
(72) Erfinder: BECKER, Torsten, 14109 Berlin (DE)
(74) Vertreter: PATERIS Patentanwälte PartmbB
(86) Internationale Anmeldenummer: PCT/EP2020/074292
(87) Internationale Veröffentlichungsnummer: WO 2021/043742

(56) Entgegenhaltungen:
- EP-A1- 2 774 685
- US-A- 4 585 930
- US-A- 5 288 981

## Beschreibung

Die Erfindung betrifft ein Verfahren zum Auslesen von Informationen aus einem ein- oder mehrdimensionalen Codierfeld.

Aus dem Stand der Technik ist es bekannt, magnetische Informationen, welche z. B. in einem magnetischen Trägermaterial gespeichert sind, mittels induktiv ansprechbaren Sensoreinrichtungen, wie z. B. einen Wickelkern aufweisende Spulen, unter Aufbringung einer Relativbewegung zwischen dem die Informationen enthaltenden Träger und dem Sensor sequentiell abzutasten. Derartige Wirkprinzipien sind beispielsweise im analogen Bereich als Tonbänder schon lange bekannt. Im digitalen Bereich findet diese induktive Abtastung magnetischer Informationen aufgrund von induzierender Relativbewegung beispielsweise in einer Magnetspur von Kredit- und/oder EC-Karten, Festplatten und dergleichen Anwendung.

Bei der vorgenannten induktiven Auslesung von im Magnetträger gespeicherten Daten ist von Nachteil, dass eine Relativgeschwindigkeit (Abtastgeschwindigkeit) zwischen der Sensoreinrichtung und dem die Information enthaltenden Trägermaterial in einem Fenster zwischen einer Mindestgeschwindigkeit und einer Maximalgeschwindigkeit liegen muss, um zuverlässig die enthaltenen Daten korrekt auslesen zu können. Eine zu langsame oder zu schnelle Relativbewegung kann zu unerwünschten Lesefehlern führen.

Zudem ist es manchmal sogar erforderlich, dass der induktiv wirkende Sensor den Magnetträger sogar berührt und somit gegebenenfalls höheren Verschleiß auf Seiten des Sensors wie auch auf Seiten des Magnetträgers verursacht. Soll eine Berührung vermieden werden, so sind aufwändige Maßnahmen zur Sicherstellung eines engen Abstandsfensters während des Abtastens notwendig, was unerwünscht ist.

Aus der US 4 585 930 A, der US 5 288 981 A und der EP 2 774 685 A1 sind jeweils Verfahrenen zum Auslesen von Informationen aus einem ein- oder mehrdimensionalen Codierfeld bekannt, wobei die Informationen innerhalb von Begrenzungen des Codierfeldes gespeichert sind und wobei die Informationen mittels eines magnetischen und/oder magnetisierbaren Mediums im ein- oder mehrdimensionalen Codierfeld vorhanden sind und zum Auslesen der Informationen eine magnetisch sensitive Sensoreinrichtung verwendet wird, aufweisend die Schritte:
a) örtliches Zusammenbringen des ein- oder mehrdimensionalen Codierfeldes und der Sensoreinrichtung auf einen Abstand geringer oder gleich eines maximalen Sensierabstandes;
b) Ausrichten der Sensoreinrichtung relativ zum Codierfeld derart, dass ein Sensoreinrichtungs-blickfeld wenigstens einen Teil aller erforderlichen (zu sensierenden) Informationen enthaltenden Teilbereich des ein- oder mehrdimensionalen Codierfeldes erfasst (Ausrichtposition);
c) Sensieren aller erforderlichen Informationen auf einmal oder sequentiell in wenigstens einer geeigneten Ausrichtposition unter Verwendung der Sensoreinrichtung in mindestens einer oder mehreren Punkterfassungen, Linienerfassungen und/oder mindestens einer Matrixerfassung für alle (zu sensierenden) erforderlichen Informationen;
d) wobei das Erfassen der erforderlichen Daten beim erfassenden Lesevorgang derart erfolgt, dass keine Ausleserelativbewegung eines Punkt-, Linien- oder Matrixsensors der Sensoreinrichtung relativ zum Codierfeld durchgeführt wird.

Aufgabe der Erfindung ist es daher, ein Verfahren zum Auslesen von Informationen aus einem ein- oder mehrdimensionalen Codierfeld anzugeben, welches in der Lage ist, besonders fehlertolerant gegenüber Relativbewegungen und deren Größe zwischen einem Codierfeld und einer Sensoreinrichtung zu sein, sowie den Auslesevorgang besonders einfach und prozesssicher zu gestalten.

Des Weiteren soll eine hohe Abtastrate sichergestellt werden, um eine große Menge von Informationen parallel oder sequentiell zu erfassen.

Weiterhin soll die Möglichkeit geschaffen werden, berührungslos eine hohe Auslesegüte/Auslesequalität bereitzustellen.

Diese Aufgaben werden mit einem Verfahren mit den Merkmalen des Anspruchs 1 gelöst. Vorteilhafte Ausführungsformen sind in Unteransprüchen angegeben.

Ein erfindungsgemäßes Verfahren ist ein Verfahren zum Auslesen von Informationen aus einem ein- oder mehrdimensionalen Codierfeld, wobei die Informationen innerhalb von Begrenzungen des Codierfeldes gespeichert sind und wobei die Informationen mittels eines magnetischen und/oder magnetisierbaren Mediums im ein- oder mehrdimensionalen Codierfeld vorhanden sind und zum Auslesen der Informationen eine magnetisch sensitive Sensoreinrichtung verwendet wird, aufweisend die Schritte:
a) örtliches Zusammenbringen des ein- oder mehrdimensionalen Codierfeldes und der Sensoreinrichtung auf einen Abstand d geringer oder gleich eines maximalen Sensierabstandes dₘₐₓ;
b) Ausrichten der Sensoreinrichtung relativ zum Codierfeld derart, dass ein Sensoreinrichtungsblickfeld wenigstens einen Teil aller erforderlichen (zu sensierenden) Informationen enthaltenden Teilbereich des ein- oder mehrdimensionalen Codierfeldes erfasst (Ausrichtposition);
c) Sensieren aller erforderlichen Informationen auf einmal oder sequentiell in wenigstens einer geeigneten Ausrichtposition unter Verwendung der Sensoreinrichtung in mindestens einer oder mehreren Punkterfassungen, Linienerfassungen und/oder mindestens einer Matrixerfassung für alle (zu sensierenden) erforderlichen Informationen;
d) wobei das Erfassen der erforderlichen Daten beim erfassenden Lesevorgang derart erfolgt, dass keine Ausleserelativbewegung eines Punkt-, Linien- oder Matrixsensors der Sensoreinrichtung relativ zum Codierfeld durchgeführt wird, dadurch gekennzeichnet, dass wenigstens nach dem Ausrichten und vor dem Sensieren entlang wenigstens einer Sensoreinrichtungsblickfeldgrenze ein Vormagnetisiermagnetfeld erzeugt wird, welches auf das magnetische und/oder magnetisierbare Material einwirkt.

Mit einem derartigen Verfahren gelingt es, ein qualitativ hochwertiges und fehlertolerantes Ausleseergebnis von Informationen zu erhalten. Dies gelingt insbesondere dadurch, dass zum Zeitpunkt der Erfassung von Informationen aus wenigstens einem Teilbereich des Codierfeldes keine oder wenigstens bis auf eventuelle Störbewegungen keine Relativbewegung zwischen der Sensoreinrichtung und auch gegebenenfalls einzelner Sensoren einer Vielzahl von Sensoren, die die Sensoreinrichtung bilden, stattfindet. Die Erfindung schlägt die besondere Auswahl der geeigneten Sensorbauarten, mit denen das Auslesen magnetischer Informationen möglich ist, und durch das Vorsehen von im Idealfall keiner Auslesebewegung vor, dass das erfindungsgemäße Verfahren unabhängig von gegebenenfalls ungenauen (zu großen oder zu kleinen) Auslesebewegungen ist.

Der Auslesevorgang, d. h. der Datenerfassungsvorgang, gestaltet sich hierdurch besonders einfach und prozesssicher. Das erfindungsgemäße Verfahren schafft zudem die Möglichkeit, berührungslos eine hohe Auslesegüte bzw. eine hohe Auslesequalität bereitzustellen. Durch parallele oder insbesondere schnell aufeinanderfolgende serielle Abtastung von Informationen, die in dem Codierfeld enthalten sind, gelingt es, eine relativ große Menge von Informationen erfassbar zu machen, ohne dass eine definierte Auslesebewegung und/oder ein berührungsbehaftetes Abtasten erfolgen muss.

Zur verbesserten Auslesefähigkeit wird nach dem Ausrichten der Sensoreinrichtung relativ zum Codierfeld und vor dem Sensieren entlang wenigstens einer Sensoreinrichtungsblickfeldgrenze eine Vormagnetisierung durchgeführt, um ein magnetisierbares Medium, welches die Informationen enthält, in besserer Art und Weise zu gestalten.

Gemäß einer weiteren bevorzugten Ausführungsform wird beim erfindungsgemäßen Verfahren als Sensoreinrichtung in Punkt-, Linien- und/oder Matrixbauweise ein Hallsensor, ein MR-Matrixsensor, ein Saturationskern-Matrix-Sensor (Förster-Sonde), ein Lorentzkraft-Magnetometer/-sensor oder ein Squid-Sensor oder ein MI-Sensor verwendet.

Die oben genannten Typen von Sensoren eignen sich in besonderer Art und Weise zum Auslesen magnetischer Informationen ohne Relativbewegung zwischen dem Sensor und der magnetischen Information. Mit den genannten Sensortypen kann zweckmäßiger Weise ein Punkt-, Linien oder Matrix-Sensor realisiert werden, wobei insbesondere unter einem Punktsensor ein einzelnes Sensorelement zu verstehen ist. Als Linien-Sensor kann eine in einer Linie angeordnete Mehrzahl von Sensorelementen verstanden werden. Als Matrix-Bauweise kommt insbesondere eine nach Art eines Sensorarrays in Zeilen und Spalten angeordnete Vielzahl von Einzelsensoren in Frage.

Besonders bevorzugt wird als magnetisches und/oder magnetisierbares Medium eine magnetische Tinte verwendet.

Eine derartige "Speicherflüssigkeit" hat den Vorteil, dass sie druckbar ist und insbesondere auch überdruckbar ist, so dass eine optische Sichtbarkeit des Codes vermieden werden kann und trotzdem eine magnetische Auslesbarkeit gewährleistet ist.

Als eine weiter bevorzugte Ausführungsform wird als flächiges oder räumliches Codierfeld ein 1D-Barcode-, ein 2D-Barcode-, z. B. ein QR-Codierfeld oder ein 3D-Codierfeld oder ein sonstiges eindeutiges Muster aus magnetischem oder magnetisierbarem Medium verwendet.

Die genannten Bauweisen von Codierfeldern sind vergleichbar zu einem optischen eindimensionalen Barcode, einem optischen zweidimensionalen Barcode, z. B. einem QR-Codierfeld oder einem 3D-Codierfeld aufgebaut, in dem beispielsweise bei der magnetischen Ausführung als dritte Dimension eine Polaritätsinformation oder eine Magnetfeldstärkeninformation ausgelesen werden kann.

Gemäß einer weiteren bevorzugten Ausführungsform wird wenigstens nach dem Ausrichten und vor dem Sensieren innerhalb des Sensoreinrichtungsblickfeldes punktuell und/oder linienförmig und/oder flächenförmig ein Vormagnetisiermagnetfeld, insbesondere von einem oder mehreren Vormagnetisier-Elementen erzeugt.

Die Vormagnetisierung kann insbesondere gemäß obiger Maßnahme in Abhängigkeit der verwendeten Sensorbauart, wie Punkt-Sensor/Linien-Sensor/Matrix-Sensor punktuell und/oder linienförmig und/oder flächenförmig erfolgen.

Weiterhin bevorzugt werden die Vormagnetisiermagnetfelder während des Sensierens aufrechterhalten, insbesondere abgeschwächt aufrechterhalten.

Obige Maßnahme verbessert das Ausleseverhalten bzw. die Auslesegüte des erfindungsgemäßen Verfahrens.

Besonders vorteilhaft ist es, wenn vor dem Sensieren aller erforderlichen Informationen, wenigstens eine VORHER-Referenzinformation aus dem Codierfeld ausgelesen wird und durch Vergleich der sensierten VORHER-Referenzinformation mit einer SOLL-VORHER-Referenzinformation das Sensierergebnis der VORHER-Referenzinformation qualitativ bewertet wird.

Mit obiger Vorgehensweise kann eine Vorhersage über die Sensiergüte vor dem eigentlichen Auslesevorgang getroffen werden. Gegebenenfalls kann bei einem Auftreten einer schlechten Vorsensierung eine Justage oder eine Korrektur der Ausrichtposition der Sensoreinrichtung erfolgen, um die sensierten VORHER-Referenzinformationen in der Qualität zu verbessern.

In einer weiter bevorzugten Ausführungsform wird allen erforderlichen Informationen wenigstens eine NACHHER-Referenzinformation aus dem Codierfeld ausgelesen und durch Vergleich der sensierten NACHHER-Referenzinformation mit einer SOLL-NACHHER-Referenzinformation das Sensierergebnis der NACHHER-Referenzinformation qualitativ bewertet.

Analog zur Sensierung von VORHER-Referenzinformationen kann das oben angegebene Sensieren von NACHHER-Referenzinformationen eine Sensiergüte nach dem eigentlichen Auslesevorgang angeben, so dass im weiteren Verlauf der eigentliche Abtastvorgang/Auslesevorgang der Informationen mit hoher Wahrscheinlichkeit zwischen den Güten der VORHER-Referenzinformation und der NACHHER-Referenzinformation zu liegen kommt. Somit gelingt es gegebenenfalls unter Verwendung beider Referenzinformationen eine Aussage über die Auslesegüte/Sensiergüte zu treffen.

Dies schlagen nachfolgend aufgeführte Maßnahmen vor.

Besonders bevorzugt erfolgt aus einem Sensierergebnis betreffend die VORHER-Referenzinformation und einem Sensierergebnis betreffend die NACHHER-Referenzinformation eine qualitative Bewertung des Sensierergebnisses, welches zwischen der VORHER-Referenzinformation und der sensierten NACHHER-Referenzinformation sensiert wurde.

Gemäß einer besonders bevorzugten Ausführungsform werden zur optischen Erkennbarkeit des Sensoreinrichtungsblickfeldes die Sensoreinrichtungsblickfeldgrenzen optisch sichtbar auf einem Trägerkörper, welcher das ein- oder mehrdimensionale Codierfeld trägt, projiziert. Alternativ kann eine optische Zentrierkennzeichnung in Punkt- oder Linienform zum Zielen auf das ein- oder mehrdimensionale Codierfeld genutzt werden.

Insbesondere wenn die Sensoreinrichtung handgeführt ist, d. h. von einem menschlichen Bediener geführt wird, kann es sinnvoll sein, dass zur Kenntlichmachung des Sensoreinrichtungsblickfeldes, insbesondere dessen Grenzen, eine optische Projektion der Sensoreinrichtungsblickfeldgrenzen oder der Codierfeldmitte erfolgt, um dem Bediener ein leichteres zur Überdeckung Bringen des Sensoreinrichtungsblickfeldes und des Codierfeldes zu ermöglichen.

Weiterhin bevorzugt findet während des Sensiervorganges, d. h. während der Erfassung einer Magnetinformation, keine Relativbewegung zwischen der Sensoreinrichtung und dem zu sensierenden ein- oder mehrdimensionale Codierfeld (Auslesebewegung) statt.

Wenigstens während des Sensiervorganges findet bevorzugt keine Relativbewegung zwischen der Sensoreinrichtung und dem zu sensierenden Codierfeld statt. Insbesondere gelingt es hierdurch, Unschärfen in der Sensierung zu vermeiden. Unter dem "Nicht-Stattfinden" einer Relativbewegung ist erfindungsgemäß zu verstehen, dass keine Relativbewegung durchgeführt wird, die einen Auslesevorgang erst möglich macht, so wie es bei induktiven Magnetsensoren, die aus dem Stand der Technik bekannt sind, der Fall ist. Störbewegungen, wie z. B. Zitterbewegungen oder Rüttelbewegungen, wenn ein handgeführter Sensor durch den menschlichen Bediener nicht 100%-ig ruhig im Raum gehalten werden kann oder wenn ein auf einem Stativ oder einem anderen Ständerwerk aufgebauter Sensor an einer laufenden Maschine in Vibration o.ä. in schwankende Bewegungen gerät, ist im Sinne der Erfindung nicht als Relativbewegung zu verstehen, da solche Arten von Bewegungen nicht absichtlich erzeugt werden sondern Folge von bestimmten Anordnungssystematiken sind.

Ebenso kann beispielsweise vorgesehen sein, dass eine auch gleichmäßige Relativbewegung zwischen dem Codierfeld (oder einem Teilbereich hiervon) und der Sensoreinrichtung stattfindet, wobei eine derartig gleichmäßige Bewegung nicht essentiell notwendig für den Auslesevorgang ist, sondern beispielsweise einem kontinuierlichen Transport von Gegenständen, die mit dem auszulesenden Codierfeld versehen sind, geschuldet ist. Die entsprechende Auslesequalität ist tolerant gegenüber einer solchen "absichtlichen" Relativbewegung, die allerdings nicht essentiell für den Auslesevorgang ist, sondern andere Beweggründe hat.

Gemäß einer weiteren bevorzugten Ausführungsform wird als ein- oder mehrdimensionales Codierfeld ein binäres Muster oder ein "Grauwerte" aufweisendes Muster verwendet, wobei unter "Grauwert" ein Bereich zu verstehen ist, der gegenüber einer maximalen Magnetisierung oder einer maximalen Magnetisierbarkeit ein niedriger magnetisierter oder niedriger magnetisierbarer Bereich ist.

Obige Maßnahmen geben eine einfache Möglichkeit an, wie beispielweise ein flächiges Codierfeld Informationen in drei Dimensionen (zwei geometrische Dimensionen und eine Dimension hinsichtlich des Betrages) beinhaltet.

Besonders vorteilhaft ist es, wenn für das Auslesen eines 1D-Codes, z. B. eines Barcodes ein Linien-Sensor aufgebaut aus mindestens zwei Einzelsensorelementen als Sensoreinrichtung verwendet wird.

Kommt beispielsweise nur das Auslesen eines Barcodes, d. h. eines eindimensionalen Codierfeldes in Frage, so kann dies in einfacher Art und Weise mit einem linienförmigen Sensor, der aus mindestens zwei Einzelsensorelementen aufgebaut ist, erfolgen.

Gemäß einer weiteren besonders bevorzugten Ausführungsform wird für das Auslesen wenigstens flächig (2D-) codierter Informationen (2D-Code) als Sensoreinrichtung ein Sensorarray, z. B. bestehend aus mindestens zwei Zeilen mit jeweils mindestens zwei Einzelsensorelementen verwendet.

In analoger Art und Weise kann für das Auslesen eines flächigen Codierfeldes entweder ein flächiger Sensor, d. h. ein Sensorarray oder ein Linien-Sensor, der zeilen- und/oder spaltenweise sequentiell abtastet, verwendet werden.

Weiterhin bevorzugt erfasst somit für das Auslesen flächig (2D-) codierter Informationen (2D-Code) das Sensorarray innerhalb eines Erfassungsvorganges die Informationen zeilen- und/oder spaltenweise sequentiell.

In einer weiter bevorzugten Ausführungsform erfolgt nach einem Erfassungsvorgang eine Verlagerung eines Punktsensors, eines Liniensensors oder eines Matrixsensors innerhalb eines Gehäuses der Sensoreinrichtung zeilen- oder spaltenweise hin zu einer weiteren Erfassungsposition der Punkt-/ Linien- und/oder Matrix-Sensoren und nach der Verlagerung in die weitere Erfassungsposition mit den gegenüber dem Gehäuse stillstehenden Punkt-/ Linien- und/oder Matrix-Sensoren ein weiterer Erfassungsvorgang.

Zu einer sequentiellen Auslesung der Informationen kann beitragen, dass eine Sensoreinrichtung, z. B. ein Punkt-Sensor, ein Linien-Sensor oder ein flächiger Matrix-Sensor gegenüber einem Gehäuse der Sensoreinrichtung in verschiedene Abtastpositionen verbringbar ist, wohingegen bevorzugt während des Auslesevorgangs selbst, d. h. während des Erfassungsvorgangs selbst der Punkt-Sensor, der Linien-Sensor oder der Matrix-Sensor sich gegenüber dem Gehäuse in Ruhe befindet und so keine Relativbewegung zwischen dem Codierfeld und der aufnehmenden/erfassenden Sensoreinrichtung vorliegt.

In gleicher Weise kann es sinnvoll sein, einen Punkt-Sensor, einen Linien-Sensor oder einen Matrix-Sensor innerhalb des Gehäuses mit einem sich gegenüber dem Gehäuse bewegenden Codierfeld während des Erfassens mit zu bewegen, so dass wenigstens zwischen dem Punkt-Sensor, dem Liniensensor und/oder dem Matrix-Sensor und dem Codierfeld beim Abtastvorgang möglichst keine Relativbewegung stattfindet, jedenfalls eine Relativgeschwindigkeit vᵣₑₗ vorliegt, die kleiner ist als eine maximal zulässige Relativgeschwindigkeit vᵣₑₗₘₐₓ.

Gemäß einer weiteren bevorzugten Ausführungsform erfolgt die Verlagerung in weitere Erfassungspositionen und das Erfassen in weiteren Erfassungspositionen so lange sequentiell, bis alle im Codierfeld enthaltenen erforderlichen Informationen erfasst sind.

Besonders vorteilhaft erfolgt die Verlagerung der Punkt-/ Linien- und/oder Matrix-Sensoren innerhalb der Sensoreinrichtung linienförmig, zeilenförmig, spaltenförmig oder bogenförmig gestuft.

Besonders vorteilhaft erfolgt die Verlagerung der Punkt-/ Linien- und/oder Matrix-Sensoren innerhalb der Sensoreinrichtung rasterartig.

Als eine weiter bevorzugte Ausführungsform beträgt eine maximale Relativgeschwindigkeit vᵣₑₗₘₐₓ zwischen der Sensoreinrichtung und dem Codierfeld bis zu der halben Erstreckung des Codierfeldes pro Sekunde in Richtung der Relativgeschwindigkeit vᵣₑₗ.

Eine umständehalber auftretende Relativgeschwindigkeit vᵣₑₗ bis zu oben angegebener Größe führt beim erfindungsgemäßen Verfahren noch zu Ausleseergebnissen mit ausreichender Güte.

Bei einer weiter bevorzugten Ausführungsform werden während des Erfassens die Punkt-/ Linien- und/oder Matrix-Sensoren innerhalb des Gehäuses der Sensoreinrichtung in Richtung der Relativgeschwindigkeit vᵣₑₗ zwischen dem Codierfeld und dem Gehäuse bewegt, insbesondere derart schnell bewegt, dass zwischen den Punkt-/ Linien- und/oder Matrix-Sensoren und dem Codierfeld die zum statischen Auslesen geeignete maximale Relativgeschwindigkeit vᵣₑₗₘₐₓ nicht überschritten wird.

Obige Maßnahme erlaubt es, eine erhöhte Relativgeschwindigkeit beispielsweise zum Zwecke eines Transports der mit dem Codierfeld versehenen Gegenstände zu realisieren und trotzdem eine maximal zulässige Relativgeschwindigkeit zwischen dem Codierfeld und der Sensoreinrichtung einzuhalten, um eine erforderliche Sensiergüte zu erreichen.

Besonders vorteilhaft werden erfasste Daten gesamt, zeilen- oder spaltenweise seriell oder gesamt, zeilen- oder spaltenweise parallel einer Auswerteeinheit zugeführt, welche derart ausgebildet und eingerichtet ist, dass aus den seriell oder parallel eingehenden Daten eine resultierende Gesamtinformation betreffend den Inhalt des Codierfeldes ausgebbar gemacht wird.

Derart erhaltene Gesamtinformationen können in bekannter Art und Weise einer Weiterverarbeitung durch eine Datenverarbeitungsanlage, z. B. enthaltend eine Ausgabeeinrichtung, zugeführt werden.

Weiterhin wird die Erfindung anhand der Figuren beispielhaft näher erläutert. Es zeigen:
Figur 1: schematisiert in einer perspektivischen Ansicht eine erste Ausführungsform einer Erfassungssituation des erfindungsgemäßen Verfahrens unter Verwendung eines Matrix-Sensors zum Erfassen eines 2D-Codierfeldes;
Figur 2: beispielhaft eine zweite Ausführungsform einer Erfassungssituation des erfindungsgemäßen Verfahrens unter Verwendung eines Liniensensors zum Auslesen eines flächigen (2D-) Codierfeldes, wobei der Linien-Sensor rasterartig verlagert wird;
Figur 3: eine dritte Ausführungsform einer Erfassungssituation des erfindungsgemäßen Verfahrens, bei dem ein Einzelsensorelement rasterartig ein 2D-Codierfeld sequentiell abtastet;
Figur 4: schematisiert ein Ablaufdiagramm für eine Ausführungsform des erfindungsgemäßen Verfahrens aufweisend eine mögliche Qualitätskontrolle des Sensierergebnisses;

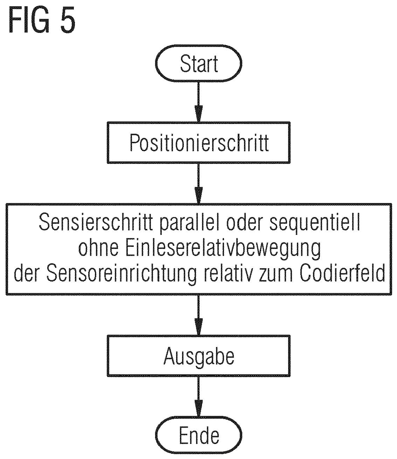

Figur 5: zeigt ein Ablaufdiagramm des erfindungsgemäßen Verfahrens in einer einfachsten Ausführungsform.

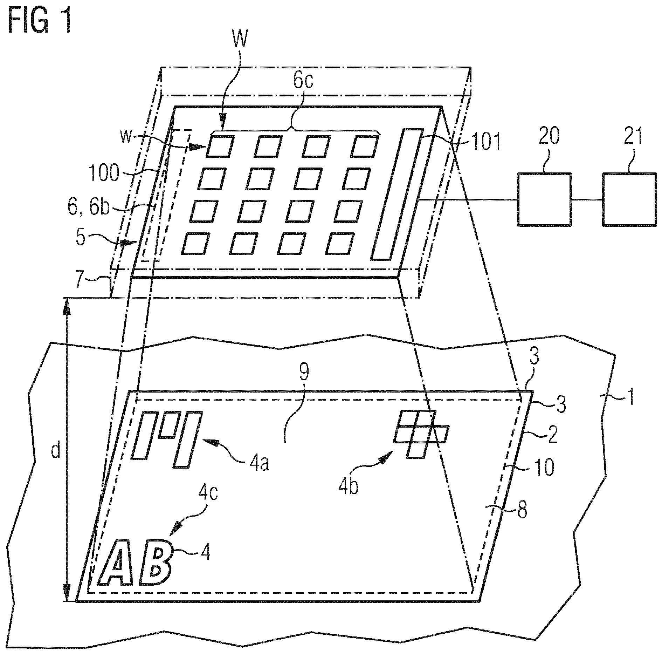

Figur 1 zeigt stark schematisiert eine Perspektivenansicht einer ersten Ausführungsform einer möglichen Erfassungssituation zum Auslesen von Informationen gemäß dem erfindungsgemäßen Verfahren.

Ein Trägerkörper 1 besitzt ein Codierfeld 2, welches Begrenzungen 3 aufweisen kann.

Innerhalb des Codierfeldes 2 sind bevorzugt mittels eines magnetischen oder magnetisierbaren Mediums 4 Informationen, insbesondere codierte Informationen angebracht.

Die Informationen können beispielsweise in Form eines eindimensionalen Codes, z. B. eines Barcode 4a, eines zweidimensionalen Codes, z. B. eines QR-Codes 4b oder als andere eindeutige Muster 4c, welche Informationen erhalten, vorliegen.

In der Darstellung gemäß Figur 1 sind beispielhaft die vorerwähnten Codearten (Barcode 4a, QR-Code 4b und anderes Muster 4c) in ein und demselben Codierfeld 2 dargestellt.

Selbstverständlich ist es möglich, im Codierfeld 2 lediglich einen der oben beschriebenen Codes oder eine Auswahl aus verschiedenen Codearten zu verwenden.

Eine Sensoreinrichtung 5 weist einen Sensor 6 auf, welcher beispielsweise in einem Gehäuse 7 angeordnet ist.

Der Sensor 6 kann als Linien-Sensor, als Punkt-Sensor, als Matrix-Sensor, was einen Sensorarray aus Punkt-Sensoren (Einzelsensoren) entspricht, ausgebildet sein.

Die Sensoreinrichtung 5 ist in einem Abstand d beabstandet zum Codierfeld 2 angeordnet und befindet sich in der Ausführungsform gemäß Figur 1 gegenüber dem Codierfeld 2 relativ gesehen in Ruhe.

Der Abstand d, der einen Sensierabstand bildet, ist derart gewählt, dass ein Sensoreinrichtungsblickfeld 8 wenigstens einen Teilbereich 9 des Codierfelds 2 abdeckt, wobei innerhalb des Teilbereichs 9 die zu sensierenden Informationen oder wenigstens eine Teilmenge der zu sensierenden Informationen angeordnet sind.

Innerhalb einer Sensoreinrichtungsblickfeldgrenze 10 kann der Sensor 6, der als Punkt-Sensor (Einzelsensor), Linien-Sensor, Matrix-Sensor, d. h. Sensorarray ausgebildet ist, Informationen auslesen. Der Sensor gibt die ausgelesenen Informationen einer Auswerteeinheit 20 weiter, welche die erfassten Informationen/Daten auswertet und gegebenenfalls einer Ausgabeeinheit 21 zuführt.

Der Sensierabstand/Abstand d ist dabei derart gewählt, dass er einen maximalen Sensierabstand dₘₐₓ nicht überschreitet.

In der vorliegenden Ausführungsform gemäß Figur 1 befindet sich der Sensor 6 gegenüber dem Codierfeld 2 in Ruhe, d. h. eine Relativgeschwindigkeit vᵣₑₗ zwischen dem Codierfeld 2 und dem Sensor 6 ist Null.

Die Relativgeschwindigkeit vᵣₑₗ kann einen maximalen Wert annehmen, d. h. das Codierfeld 2 kann sich relativ zum Sensor 6 mit einer maximalen Relativgeschwindigkeit vᵣₑₗₘₐₓ bewegen, wobei die maximale Relativgeschwindigkeit vᵣₑₗₘₐₓ derart gewählt ist, dass aufgrund dieser Relativbewegung keine unzulässig hohen Unschärfen bei der Sensierung der Informationen entstehen.

Das erfindungsgemäße Verfahren unter Verwendung des Sensors 6 zeichnet sich dadurch aus, dass zum Zwecke des Auslesens gerade keine Relativgeschwindigkeit vᵣₑₗ zwischen dem Codierfeld 2 und dem Sensor 6 notwendig ist. Im Gegensatz dazu bedarf es einer solchen Relativgeschwindigkeit zum Zwecke des Auslesens bei einer Sensoreinrichtung gemäß dem Stand der Technik, die auf dem Wirkprinzip der Induktion beruht, da bei einem auf Induktion basierendem Lesegerät ohne eine solche Relativbewegung (d. h. mit einer Auslesegeschwindigkeit von 0) kein elektrisches Signal erzeugt werden würde.

Die im Rahmen der vorliegenden Erfindung zwar in Maßen zulässige, aber nicht notwendige Relativgeschwindigkeit vᵣₑₗ ist hinsichtlich ihrer Höhe und gegebenenfalls auch hinsichtlich ihrer Richtung lediglich dadurch begrenzt, dass trotz (nicht wegen) dieser Relativgeschwindigkeit vᵣₑₗ mittels der ausgewählten Sensoren, die z. B. ein Hallsensor, ein MR-Sensor, ein Saturationskern-Matrix-Sensor (Förster-Sonde), ein Lorentzkraft-Magnetometer/-sensor oder ein Squid-Sensor oder ein MI-Sensor sein können, ein ordnungsgemäßes Auslesen ermöglicht ist.

Alle diese Sensoren haben gemeinsam, dass eine magnetische Information erfasst werden kann, ohne dass eine Relativbewegung zwischen Sensor und einem die magnetische Information enthaltenen Gegenstand erfolgen muss.

Gleichwohl ist es sinnvoll, gewisse Relativbewegungen mit einer maximalen Relativgeschwindigkeit vᵣₑₗₘₐₓ zuzulassen, da es im technischen Alltag nicht immer möglich ist, eine vollkommen bewegungslose Anordnung der Sensoreinrichtung 5 gegenüber dem Codierfeld 2 sicherzustellen. Beispielsweise kann es bei einer handgeführten Sensoreinrichtung 5 zu Zitterbewegungen des Bedieners kommen, die allerdings beim erfindungsgemäßen Verfahren als Störbewegungen, die idealerweise vermieden werden sollten, anzusehen sind.

In der Ausführungsform gemäß Figur 1 ist eine Erfassungssituation des erfindungsgemäßen Verfahrens auf der Basis eines Matrix-Sensors 6b gezeigt. Ein solcher Matrix-Sensor 6b ist beispielsweise auf einer Grundplatte 100 gebildet, auf dem ein Sensorarray 6c angebracht ist. Das Sensorarray 6c besitzt beispielsweise vier Zeilen w, x, y und z und vier Spalten W, X, Y und Z. Zudem können auf der Grundplatte beispielsweise hundert Vormagnetisierer 101 angeordnet sein, mit denen die Sensoreinrichtung 5 in der Lage ist, vor dem Erfassen eine Vormagnetisierung der im Codierfeld 2 enthaltene Informationen, z. B. gespeichert im Medium 4, durchzuführen.

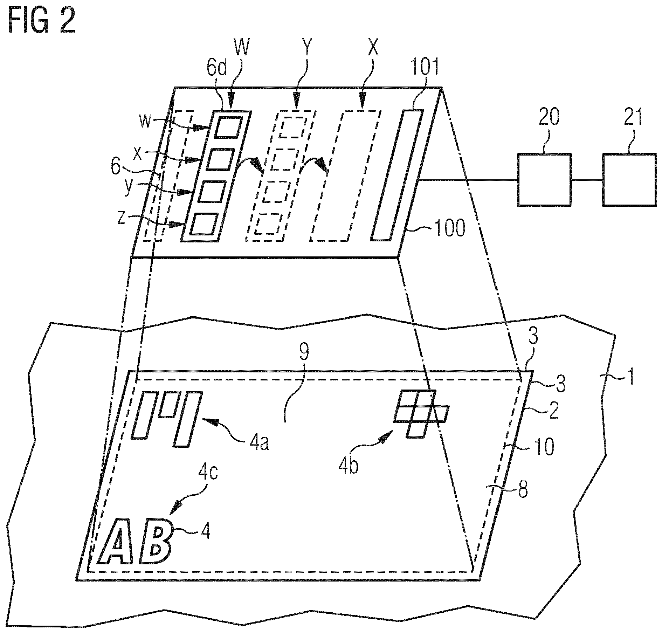

Eine weitere Erfassungssituation des erfindungsgemäßen Verfahrens zeigt Figur 2. Der Trägerkörper 1, das Codierfeld 2 und die hierin enthaltenen Informationen entsprechen dabei der Beschreibung, die im Zusammenhang mit Figur 1 abgegeben wurde.

Im Unterschied zur Erfassungssituation gemäß Figur 1 ist der Sensor 6 in der vorliegenden Erfassungssituation als Linien-Sensor 6d ausgebildet, welcher die Spalten W, X, Y, Z erfasst. Der Linien-Sensor 6d liest sequentiell in unterschiedlichen Positionen (Positionen der Spalten W, X, Y, Z) die Informationen des Codierfeld 2 nacheinander, d. h. sequentiell aus und gibt diese der Auswerteeinheit 20 weiter. Eine Ausgabeeinheit 21 kann gegebenenfalls die Informationen anzeigen. Alternativ können - wie auch in der Erfassungssituation gemäß Figur 1 - die Informationen entweder direkt aus der Sensoreinrichtung 5 oder unter Zwischenschaltung der Auswerteeinheit 20 beispielsweise an eine Datenerfassungseinrichtung (nicht gezeigt) weitergeleitet werden.

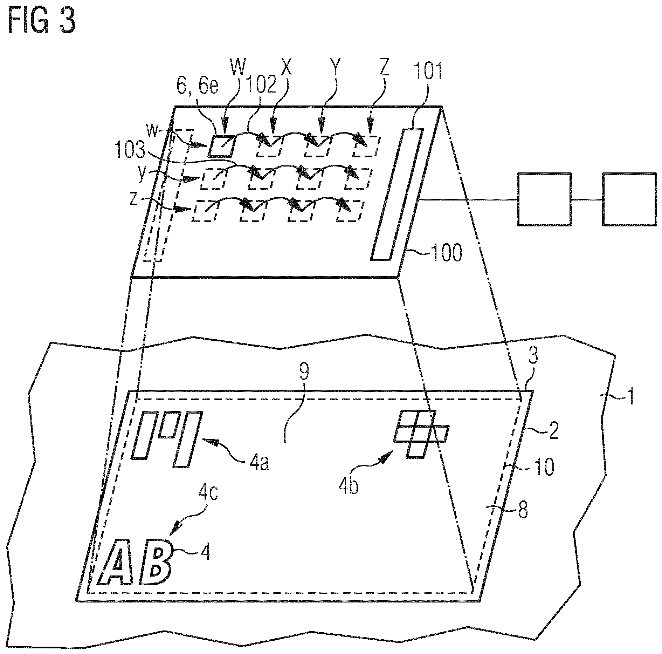

Eine dritte Erfassungssituation des erfindungsgemäßen Verfahrens zeigt beispielhaft Figur 3. Der Sensor 6 der Sensoreinrichtung 5 ist in dieser Ausführungsform als Punkt-Sensor 6e ausgebildet, welcher sowohl entlang der Zeilen w, x, y, z als auch entlang der Spalten W, X, Y, Z bevorzugt rastend bewegbar ist. Eine derartige Verlagerungsmöglichkeit ist durch die Pfeile 102; 103 verdeutlicht. Bei der vorliegenden Ausführungsform wird nach jeder einzelnen Erfassung durch den Punkt-Sensor 6e, der naturgemäß nur einen Teilbereich des Codierfelds 2 in einem Schritt abtasten kann, der Punkt-Sensor 6e entweder um eine Zeile oder um eine Spalte weiterbewegt und dort erneut angehalten. In der angehaltenen Position erfolgt der nächste Ausleseschritt, so dass trotz einer Relativbewegung des Sensors, z. B. des Punkt-Sensors 6e oder des LinienSensors 6d aus Figur 2 zum Zeitpunkt der Informationserfassung aus dem Codierfeld 2 möglichst keine Relativgeschwindigkeit vᵣₑₗ oder höchstens einen maximale Relativgeschwindigkeit vᵣₑₗ₋ₘₐₓ, wie sie oben im Zusammenhang mit Figur 1 beschrieben wurde, vorliegt.

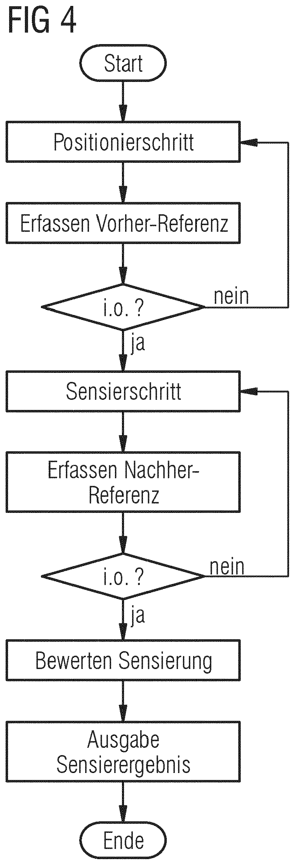

Figur 4 zeigt ein Ablaufdiagramm einer besonderen Ausführungsform des erfindungsgemäßen Verfahrens. Zunächst wird die Sensoreinrichtung 5 in einem Positionierschritt relativ zum Codierfeld 2 in eine Erfassungsposition positioniert.

Hierauf folgend wird in einem ersten Erfassungsschritt eine VORHER-Referenz erfasst und mit einer abgespeicherten SOLL-VORHER-Referenz verglichen. Sofern das Erfassungsergebnis, d. h. das Sensierergebnis des ersten Erfassungsschrittes betreffend die VORHER-Referenz für in Ordnung gefunden wird, kann ein zweiter Erfassungsschritt, der sogenannte Sensierschritt erfolgen, in dem die relevante Information, die im Codierfeld 2 abgelegt ist, erfasst wird.

Sofern das Erfassungsergebnis der VORHER-Referenz für nicht in Ordnung gefunden wird, kann erneut der Positionierschritt durchgeführt werden, um gegebenenfalls eine verbesserte Erfassungsgenauigkeit der Sensoreinrichtung 5 zu gewährleisten.

Nach dem Sensierschritt, d. h. im Erfassungsschritt der relevanten Informationen, die im Codierfeld 2 enthalten sind, erfolgt gemäß dieser Ausführungsform des erfindungsgemäßen Verfahrens ein zweiter Erfassungsschritt einer NACHHER-Referenz, die beispielsweise - wie die VORHER-Referenz - in einem vordefinierten Randbereich des Codierfeld 2 vorhanden ist. Die NACHHER-Referenz wird dann mit einer SOLL-NACHHER-Referenz verglichen. Sofern die NACHHER-Referenz für in Ordnung befunden wird, kann davon ausgegangen werden, dass zwischen einer i.O.-VORHER-Referenz und einer i.O.-NACHHER-Referenz ein Sensierschritt der Informationen des Codierfelds 2 in ausreichender Güte/Qualität erfolgt ist.

Sofern die NACHHER-Referenz für nicht in Ordnung oder nicht ausreichend qualitativ hochwertig erachtet wird, kann gegebenenfalls nochmals ein Sensierschritt durchgeführt werden, um ein erneutes Erfassen der NACHHER-Referenz zu erlauben, um gegebenenfalls Störeinflüsse durch eine zeitlich spätere nochmalige Erfassung auszuschließen.

Eine qualitativ bewertete Sensierung bzw. eine qualitativ für in Ordnung befundene Sensierung kann der Auswerteeinheit bzw. einer Ausgabeeinheit des Sensierergebnisses zugeführt werden.

In einer weiteren Ausführungsform des erfindungsgemäßen Verfahrens, welches eine einfache Ausführungsform ist, wird der Positionierschritt derart durchgeführt, dass die Sensoreinrichtung 5 bzw. der Sensor 6 relativ zum Codierfeld 2 in eine für eine Datenerfassung/Erfassung geeignete Position verbracht wird. Im Anschluss daran erfolgt der Sensierschritt des Auslesens der im Codierfeld 2 enthaltenen Informationen. Das Auslesen kann dabei zeilen- oder spaltenweise oder für die gesamte Matrix parallel oder sequentiell erfolgen. Bevorzugt erfolgt das Auslesen ohne Ausleserelativbewegung der Sensoreinrichtung relativ zum Codierfeld 2. Die im Sensierschritt sensierten Informationen können im Anschluss daran einer Ausgabe zugeführt werden.

Mit dem erfindungsgemäßen Verfahren gelingt es in besonders vorteilhafter Weise die erfindungsgemäß gestellte Aufgabe zu erfüllen. Insbesondere ist eine verschleißfreie, da berührungslose Sensierung von Informationen, die in einem magnetischen oder magnetisierbaren Medium gespeichert sind, möglich.

Zudem ist das erfindungsgemäße Verfahren unempfindlich gegenüber und unabhängig von definierten Relativgeschwindigkeiten, da das erfindungsgemäße Verfahren Sensoren nutzt, die nicht auf induktive Signalerzeugung angewiesen sind.

### Bezugszeichenliste

- 1: Trägerkörper
- 2: Codierfeld
- 3: Begrenzungen
- 4: Medium
- 4a: Barcode
- 4b: QR-Code
- 4c: Muster
- 5: Sensoreinrichtung
- 6: Sensor
- 6b: Matrix-Sensor
- 6c: Sensorarray
- 6d: Linien-Sensor
- 6e: Punkt-Sensor
- 7: Gehäuse
- 8: Sensoreinrichtungsblickfeld
- 9: Teilbereich
- 10: Sensoreinrichtungsblickfeldgrenze

- 20: Auswerteeinheit
- 21: Ausgabeeinheit

- d: Abstand
- dₘₐₓ: maximaler Sensierabstand
- vᵣₑₗ: Relativgeschwindigkeit
- vᵣₑₗₘₐₓ: maximale Relativgeschwindigkeit

- w, x, y, z: Zeilen
- W, X, Y, Z: Spalten

- 100: Grundplatte
- 101: Vormagnetisierer
- 102, 103: Pfeile

## Patentansprüche

1. Verfahren zum Auslesen von Informationen aus einem ein- oder mehrdimensionalen Codierfeld (2), wobei die Informationen innerhalb von Begrenzungen (3) des Codierfelds (2) gespeichert sind und wobei die Informationen mittels eines magnetischen und/oder magnetisierbaren Mediums (4) im ein- oder mehrdimensionalen Codierfeld (2) vorhanden sind und zum Auslesen der Informationen eine magnetisch sensitive Sensoreinrichtung (5) verwendet wird, aufweisend die Schritte:
a) örtliches Zusammenbringen des ein- oder mehrdimensionalen Codierfeldes (2) und der Sensoreinrichtung (5) auf einen Abstand (d) geringer oder gleich eines maximalen Sensierabstandes (dₘₐₓ);
b) Ausrichten der Sensoreinrichtung (5) relativ zum Codierfeld (2) derart, dass ein Sensoreinrichtungsblickfeld (8) wenigstens einen Teil aller erforderlichen, zu sensierenden Informationen enthaltenden Teilbereich (9) des ein- oder mehrdimensionalen Codierfeldes (2) erfasst ,
c) Sensieren aller erforderlichen Informationen auf einmal oder sequentiell in wenigstens einer geeigneten Ausrichtposition unter Verwendung der Sensoreinrichtung (5) in mindestens einer oder mehreren Punkterfassungen, Linienerfassungen und/oder mindestens einer Matrixerfassung für alle zu sensierenden, erforderlichen Informationen;
d) wobei das Erfassen der erforderlichen Daten beim erfassenden Lesevorgang derart erfolgt, dass keine Ausleserelativbewegung eines Punkt-, Linien- oder Matrixsensors der Sensoreinrichtung (5) relativ zum Codierfeld (2) durchgeführt wird, **dadurch gekennzeichnet, dass** wenigstens nach dem Ausrichten und vor dem Sensieren entlang wenigstens einer Sensoreinrichtungsblickfeldgrenze (10) ein Vormagnetisiermagnetfeld erzeugt wird, welches auf das magnetische und/oder magnetisierbare Material einwirkt.

2. Verfahren nach Anspruch 1, **dadurch gekennzeichnet, dass** wenigstens nach dem Ausrichten und vor dem Sensieren innerhalb des Sensoreinrichtungsblickfeldes (8) punktuell und/oder linienförmig und/oder flächenförmig mindestens ein Vormagnetisiermagnetfeld erzeugt wird.

3. Verfahren nach Anspruch 1 oder 2, **dadurch gekennzeichnet, dass** das/die Vormagnetisiermagnetfeld/er während des Sensierens aufrechterhalten wird/werden, insbesondere abgeschwächt aufrechterhalten wird/werden.

4. Verfahren nach einem der vorhergehenden Ansprüche, **dadurch gekennzeichnet, dass** zur optischen Erkennbarkeit des Sensoreinrichtungsblickfeldes (8) die Sensoreinrichtungsblickfeldgrenzen (10) oder ein Zentrierpunkt oder eine Zentrierlinie optisch sichtbar auf einen Trägerkörper (1), welcher das ein- oder mehrdimensionale Codierfeld (2) trägt, projiziert werden.

5. Verfahren nach einem der vorhergehenden Ansprüche, **dadurch gekennzeichnet, dass** für das Auslesen eines 1D-Codes, bevorzugt eines Barcodes ein Linien-Sensor (6d) aufgebaut aus mindestens zwei Einzelsensorelementen als Sensoreinrichtung (5) verwendet wird.

6. Verfahren nach einem der vorhergehenden Ansprüche, **dadurch gekennzeichnet, dass** für das Auslesen flächig (2D-) codierter Informationen (2D-Code) das Sensorarray (6c) aus mindestens zwei Zeilen mit mindestens jeweils zwei Einzelsensorelementen innerhalb eines Erfassungsvorganges die Informationen zeilen- und/oder spaltenweise sequentiell erfasst.

7. Verfahren nach einem der vorhergehenden Ansprüche, **dadurch gekennzeichnet, dass** nach einem Erfassungsvorgang eine Verlagerung eines Punktsensors (6e), eines Liniensensors (6d) oder eines Matrixsensors (6b) innerhalb eines Gehäuses (7) der Sensoreinrichtung (5) hinzu einer weiteren Erfassungsposition der Punkt-/ Linien- und/oder Matrix-Sensoren erfolgt und nach der Verlagerung in die weitere Erfassungsposition mit den einem gegenüber dem Gehäuse (7) stillstehenden Punkt-/ Linien- und/oder Matrix-Sensoren ein weiterer Erfassungsvorgang erfolgt.

8. Verfahren nach Anspruch 7, **dadurch gekennzeichnet, dass** die Verlagerung in weitere Erfassungspositionen und das Erfassen in weiteren Erfassungspositionen so lange sequentiell erfolgt, bis alle im Codierfeld (2) enthaltenen erforderlichen Informationen erfasst sind.

9. Verfahren nach einem der Ansprüche 7 oder 8, **dadurch gekennzeichnet, dass** die Verlagerung der Punkt-/Linien- und/oder Matrix-Sensoren innerhalb der Sensoreinrichtung (5) linienförmig, zeilenförmig, spaltenförmig oder bogenförmig gestuft erfolgt.

10. Verfahren nach einem der Ansprüche 7 bis 9, **dadurch gekennzeichnet, dass** die Verlagerung der Punkt-/Linien- und/oder Matrix-Sensoren innerhalb der Sensoreinrichtung (5) rasterartig erfolgt.

11. Verfahren nach einem der vorhergehenden Ansprüche, **dadurch gekennzeichnet, dass** eine maximale Relativgeschwindigkeit (vᵣₑₗₘₐₓ) zwischen der Sensoreinrichtung (5) und dem Codierfeld (2) bis zu der halben Erstreckung des Codierfeldes (2) pro Sekunde in Richtung der Relativgeschwindigkeit (vᵣₑₗ) beträgt.

12. Verfahren nach einem der Ansprüche 7 bis 10, **dadurch gekennzeichnet, dass** während des Erfassens die Punkt-/Linien- und/oder Matrix-Sensoren innerhalb des Gehäuses (7) der Sensoreinrichtung (5) in Richtung der Relativgeschwindigkeit (vᵣₑₗ) zwischen dem Codierfeld (2) und dem Gehäuse (7) bewegt werden, insbesondere derart schnell bewegt werden, dass zwischen den Punkt-/Linien- und/oder Matrix-Sensoren und dem Codierfeld (2) eine zum statischen Erfassen geeignete maximale Relativgeschwindigkeit (vᵣₑₗₘₐₓ) nicht überschritten wird.

13. Verfahren nach einem der vorhergehenden Ansprüche, **dadurch gekennzeichnet, dass** erfasste Daten als Matrix, zeilen- oder spaltenweise seriell oder parallel einer Auswerteeinheit (20) zugeführt werden, welche derart ausgebildet und eingerichtet ist, dass aus den seriell oder parallel eingehenden Daten eine resultierende Gesamtinformation betreffend den Inhalt des Codierfeldes (2) ausgebbar gemacht wird.

## Claims

1. Method for reading information from a one- or multi-dimensional coding field (2), the information being stored within boundaries (3) of the coding field (2), and the information being available in the one- or multi-dimensional coding field (2) by means of a magnetic and/or magnetisable medium (4), and a magnetically sensitive sensor device (5) being used to read the information, comprising the steps of:
a) locally bringing together the one- or multi-dimensional coding field (2) and the sensor device (5) to a distance (d) less than or equal to a maximum sensing distance (dₘₐₓ);
b) orientating the sensor device (5) relative to the coding field (2) such that a sensor device field of vision (8) captures at least one part of a portion (9) of the one- or multi-dimensional coding field (2), which portion contains all the required information to be sensed;
c) sensing all the required information either at once or sequentially in at least one suitable orientation position using the sensor device (5) in at least one or more point captures, line captures and/or at least one matrix capture for all the required information that is to be sensed;
d) the required data being captured during the capture-reading operation in such a way that no relative readout movement of a point sensor, line sensor or matrix sensor of the sensor device (5) relative to the coding field (2) is performed, **characterised in that** a bias field is generated along at least one sensor device field of vision limit (10) at least after the orientation and before the sensing, said bias field acting on the magnetic and/or magnetisable material.

2. Method according to claim 1, **characterised in that** at least one bias field is generated in a punctiform and/or linear and/or two-dimensional manner within the sensor device field of vision (8) at least after the orientation and before the sensing.

3. Method according to claim 1 or claim 2, **characterised in that** the bias field(s) is/are maintained during the sensing, in particular is/are maintained in weakened form.

4. Method according to any of the preceding claims, **characterised in that,** to render the sensor device field of vision (8) optically detectable, the sensor device field of vision limits (10) or a centre point or centre line is/are projected in an optically visible manner onto a carrier member (1) carrying the one- or multi-dimensional coding field (2).

5. Method according to any of the preceding claims, **characterised in that,** to read a 1D code, preferably a barcode, a line sensor (6d) constructed from at least two individual sensor elements is used as the sensor device (5).

6. Method according to any of the preceding claims, **characterised in that,** to read information encoded in two-dimensional (2D) form (2D code), the sensor array (6c) composed of at least two rows, each having at least two individual sensor elements, sequentially captures the information row by row and/or column by column within one capture process.

7. Method according to any of the preceding claims, **characterised in that,** after a capture process, a point sensor (6e), a line sensor (6d) or a matrix sensor (6b) is shifted inside a housing (7) of the sensor device (5) towards a further capturing position of the point sensors, line sensors and/or matrix sensors, and after the shifting into the further capturing position, a further capture process is carried out using the point sensors, line sensors and/or matrix sensors, which remain stationary in relation to the housing (7).

8. Method according to claim 7, **characterised in that** the shifting into further capturing positions and the capture in further capturing positions are carried out sequentially until all the required information contained in the coding field (2) is captured.

9. Method according to any of claims 7 or 8, **characterised in that** the point sensors, line sensors and/or matrix sensors are shifted stepwise within the sensor device (5) in a linear, row-by-row, column-by-column or arcuate manner.

10. Method according to any of claims 7 to 9, **characterised in that** the point sensors, line sensors and/or matrix sensors are shifted within the sensor device (5) in a grid-like manner.

11. Method according to any of the preceding claims, **characterised in that** a maximum relative velocity (vᵣₑₗₘₐₓ) between the sensor device (5) and the coding field (2) is up to half the extension of the coding field (2) per second in the direction of the relative velocity (vᵣₑₗ) .

12. Method according to any of claims 7 to 10, **characterised in that** during the capture, the point sensors, line sensors and/or matrix sensors are moved within the housing (7) of the sensor device (5) between the coding field (2) and the housing (7) in the direction of the relative velocity (vᵣₑₗ), in particular are moved so quickly that a maximum relative velocity (vᵣₑₗₘₐₓ) suitable for static capture is not exceeded between the point sensors, line sensors and/or matrix sensors and the coding field (2).

13. Method according to any of the preceding claims, **characterised in that** captured data are supplied serially or concurrently to an evaluation unit (20) as a matrix or in a row-by-row or column-by-column manner, said evaluation unit being configured and adapted such that, from the serially or concurrently incoming data, a resulting complete set of information regarding the content of the coding field (2) is rendered displayable.

## Revendications

1. Procédé de lecture d'informations à partir d'un champ de codage unidimensionnel ou multidimensionnel (2), les informations étant stockées dans les limites (3) du champ de codage (2) et les informations étant présentes dans le champ de codage unidimensionnel ou multidimensionnel (2) au moyen d'un support magnétique et/ou magnétisable (4) et l'on utilise un dispositif de détection magnétiquement sensible (5) pour lire les informations, le procédé comprenant les étapes de:
a) rapprocher le champ de codage unidimensionnel ou multidimensionnel (2) et le dispositif de détection (5) à une distance (d) inférieure ou égale à la distance de détection maximale (dₘₐₓ);
b) aligner le dispositif de détection (5) par rapport au champ de codage (2) de telle sorte qu'un champ de vision du dispositif de détection (8) détecte au moins une partie de toutes les sous-zones (9) du champ de codage unidimensionnel ou multidimensionnel (2) contenant des informations nécessaires à détecter;
c) détecter toutes les informations nécessaires à la fois ou en séquence dans au moins une position d'alignement appropriée en utilisant le dispositif de détection (5) dans au moins une ou plusieurs détections de points, détections de lignes et/ou au moins une détection de matrices pour toutes les informations nécessaires à détecter;
d) dans lequel l'acquisition des données nécessaires pendant le processus de lecture se fait de telle sorte qu'aucun mouvement relatif de lecture d'un capteur ponctuel, linéaire ou matriciel du dispositif de détection (5) ne se produise par rapport au champ de codage (2), **caractérisé en ce que**, au moins après l'alignement et avant la détection le long d'au moins une limite du champ de vision du dispositif de détection (10), l'on génère un champ magnétique de pré-magnétisation agissant sur le matériau magnétique et/ou magnétisable.

2. Procédé selon la revendication 1, **caractérisé en ce que**, au moins après l'alignement et avant la détection dans le champ de vision du dispositif de détection (8), l'on génère au moins un champ magnétique de pré-magnétisation de manière ponctuelle et/ou linéaire et/ou planaire.

3. Procédé selon les revendications 1 ou 2, **caractérisé en ce que** le/les champ(s) magnétique(s) de pré-magnétisation est/sont maintenu(s) pendant la détection, notamment il/ils est/sont maintenu(s) atténué(s).

4. Procédé selon l'une des revendications précédentes, **caractérisé en ce que**, pour la reconnaissance optique du champ de vision du dispositif de détection (8), les limites du champ de vision du dispositif de détection (10) ou un point de centrage ou une ligne de centrage sont projetés de manière optiquement visible sur un corps de support (1) qui supporte le champ de codage unidimensionnel ou multidimensionnel (2).

5. Procédé selon l'une des revendications précédentes, **caractérisé en ce qu'**un capteur linéaire (6d) composé d'au moins deux éléments capteurs individuels est utilisé comme dispositif de détection (5) pour la lecture d'un code 1D, de préférence un code à barres.

6. Procédé selon l'une des revendications précédentes, **caractérisé en ce que**, pour la lecture d'informations codées plates (2D) (code 2D), le réseau de capteurs (6c) d'au moins deux rangées, chacune avec au moins deux éléments capteurs individuels, détecte en séquence les informations par ligne et/ou par colonne dans le cadre d'un processus de détection.

7. Procédé selon l'une des revendications précédentes, **caractérisé en ce que**, après un processus de détection, un déplacement d'un capteur ponctuel (6e), linéaire (6d) ou matriciel (6b) a lieu à l'intérieur d'un boîtier (7) du dispositif de détection (5) vers une autre position de détection des capteurs ponctuels/linéaires et/ou matriciels et, après le déplacement dans l'autre position de détection, un autre processus de détection a lieu avec les capteurs ponctuels/linéaires et/ou matriciels immobiles par rapport au boîtier (7).

8. Procédé selon la revendication 7, **caractérisé en ce que** le déplacement dans d'autres positions de détection et la détection dans d'autres positions de détection ont lieu en séquence tant que toutes les informations nécessaires contenues dans le champ de codage (2) ont été détectées.

9. Procédé selon l'une des revendications 7 ou 8, **caractérisé en ce que** le déplacement des capteurs ponctuels/linéaires et/ou matriciels à l'intérieur du dispositif de détection (5) se fait en forme de ligne, rangée, colonne ou arc en escalier.

10. Procédé selon l'une des revendications 7 à 9, **caractérisé en ce que** le déplacement des capteurs ponctuels/linéaires et/ou matriciels à l'intérieur du dispositif de détection (5) se fait de manière réticulaire.

11. Procédé selon l'une des revendications précédentes, **caractérisé en ce qu'**une vitesse relative maximale (vᵣₑₗₘₐₓ) entre le dispositif de détection (5) et le champ de codage (2) s'élève jusqu'à la moitié de l'extension du champ de codage (2) par seconde dans la direction de la vitesse relative (vᵣₑₗ) .

12. Procédé selon l'une des revendications 7 à 10, **caractérisé en ce que** pendant la détection les capteurs ponctuels/linéaires et/ou matriciels sont déplacés à l'intérieur du boîtier (7) du dispositif de détection (5) dans la direction de la vitesse relative (vᵣₑₗ) entre le champ de codage (2) et le boîtier (7), notamment ils sont déplacés si rapidement qu'ils ne dépassent pas une vitesse relative maximale (vᵣₑₗₘₐₓ) adaptée à la détection statique entre les capteurs ponctuels/linéaires et/ou matriciels et le champ de codage (2).

13. Procédé selon l'une des revendications précédentes, **caractérisé en ce que** les données enregistrées sont fournies en forme de matrice, en lignes ou colonnes, en série ou en parallèle, à une unité d'évaluation (20) qui est conçue et réglée de telle sorte que l'on puisse obtenir une information globale résultante concernant le contenu du champ de codage (2) à partir des données entrantes, en série ou en parallèle.
